# EUROPÄISCHE PATENTANMELDUNG

(11) **EP 3 907 957 A1**
(43) Veröffentlichungstag der Anmeldung: **10.11.2021**
(21) Anmeldenummer: 20173211.2
(22) Anmeldetag: 06.05.2020
(51) Int. Cl.: H04L 29/06

(54) **VERFAHREN ZUR ZULASSUNG ZU EINEM BLOCKCHAIN-NETZWERK UND BLOCKCHAIN-NETZWERK**

(71) Anmelder: Siemens Aktiengesellschaft, 80333 München (DE)
(72) Erfinder: Sauer, Markus, 81739 München (DE); Singh, Saurabh Narayan, 81739 München (DE)

(57) **Zusammenfassung**

Bei dem Verfahren zur Zulassung zu einem mit Knoten (BSN) gebildeten Blockchain-Netzwerks (BCN) durch einen Knoten (BSN) des Blockchain-Netzwerks (BCN) wird mindestens eine mit allen übrigen Knoten (BSN) des Blockchain-Netzwerks (BCN) abgestimmte Teilnahmeregeln vorgehalten und es wird eine Zulassungskontrolle durchgeführt, mittels welcher anhand der mindestens einen Teilnahmeregel eine Zulassungsentscheidung zur Zulassung zum Blockchain-Netzwerk (BCN) getroffen wird, wenn ein bislang nicht zum Blockchain-Netzwerk (BCN) gehöriger Knoten die mindestens eine Teilnahmeregel erfüllt und wenn diese Zulassungsentscheidung mit Zulassungsentscheidungen übriger Knoten (BSN) des Blockchain-Netzwerks (BCN) übereinstimmt.

Das Computerprogrammprodukt ist zur Ausführung eines solchen Verfahrens ausgebildet.

Der computerlesbare Datenträger enthält ein solches Computerprogrammprodukt.

Das Blockchain-Netzwerk ist mit Knoten (BSN) gebildet, wobei einer, mehrere oder sämtliche der Knoten (BSN) zur Ausführung eines solchen Verfahrens ausgebildet ist oder sind.

## Beschreibung

Die Erfindung betrifft ein Verfahren zur Zulassung zu einem mit Knoten gebildeten Blockchain-Netzwerk sowie ein Blockchain-Netzwerk. Die Erfindung betrifft zudem ein Computerprogrammprodukt sowie einen computerlesbaren Datenträger.

Die Blockchain-Technologie soll idealerweise eine freie zugängliche und dezentrale Technologie sein. Frei zugänglich bedeutet in diesem Zusammenhang, dass jeder, der einem Blockchain-Netzwerk beitreten möchte, dieses im optimalen Fall ohne Beschränkungen unternehmen kann.

Diese freie Zugänglichkeit kann zu bestimmten Sicherheitsproblemen führen. In industriellen Anwendungsfällen ist die Manipulationssicherheit und die dezentrale Natur der Blockchain-Technologie zwar eine gewünschte Eigenschaft. Jedoch kann in bestimmten Anwendungsfällen eines Blockchain-Netzwerks eine Beschränkung des Zugangs zum Blockchain-Netzwerk gewünscht sein. Beispielsweise können in Lieferketten-Anwendungsfällen Logistik-Anbieter fordern, den Zugang weiterer Logistik-Anbieter zum Blockchain-Netzwerk aus Datenschutzgründen zu beschränken.

Eine Vertraulichkeit im Blockchain-Netzwerk gespeicherter Daten, eine volle Transparenz der im Blockchain-Netzwerk gespeicherten Daten sowie ein freier Zugang zum Blockchain-Netzwerk lassen sich nicht gleichzeitig miteinander vereinbaren. Je weniger zentral die Architektur und Implementierung des Blockchain-Netzwerks sind, d.h. je freier der Zugang zum Blockchain-Netzwerk ist, umso transparenter werden die Architektur, die Implementierung des Blockchain-Netzwerks, und gegebenenfalls auch dort gespeicherte Daten und/oder Transaktionen und/oder Teilnehmeraktionen für jeden Teilnehmer. Eine Beschränkung des Zugangs zum Blockchain-Netzwerk hingegen bietet zwar ein höheres Maß an Vertraulichkeit, konterkariert jedoch die Transparenz, die dezentrale Natur und die Automatisierung des Blockchain-Netzwerks.

Bekannte Lösungen stellen in diesem Spannungsfeld die Automatisierbarkeit und die dezentrale Natur des Blockchain-Netzwerks zurück. Beispielsweise besteht regelmäßig lediglich eine einzige Einheit, welche einen Zugang zum Blockchain-Netzwerk verwaltet. Eine solche einzige Einheit bildet daher eine Schwachstelle des Blockchain-Netzwerks.

Eine Entscheidung über die Zulassung zum Blockchain-Netzwerk ist daher nicht direkt automatisierbar, was der Idee eines dezentralisierten und frei zugänglichen Blockchain-Netzwerks, dessen einzelne Teilnehmer nicht notwendig vertrauenswürdig sein müssen, widerspricht. Blockchain-Netzwerke wurde jedoch gerade dieser Idee heraus entwickelt.

Bislang wurde dieses Problem mit einem der nachfolgend genannten Verfahren oder mit einer Kombination dieser Verfahren gelöst:
Gemäß einem bekannten Ansatz wird ein frei zugängliches Blockchain-Netzwerk in ein zugangsbeschränktes Blockchain-Netzwerk mittels einer Positivliste von vertrauenswürdigen Teilnehmern umgewandelt:
Dazu wird die Positivliste auf Serverebene verwaltet. Diese Positivliste enthält IP-Adressen aller Teilnehmer, denen der Zugang zum Blockchain-Netzwerk erlaubt ist. Der Kreis der Teilnehmer wird in mittels einer einhelligen Zustimmung sämtlicher Teilnehmer bei der Begründung des Netzwerks festgelegt. Dieser Ansatz begegnet großen Herausforderungen:
Wenn ein neuer Teilnehmer zur Positivliste hinzugefügt werden soll, müssen zunächst alle bisherigen Teilnehmer über einen gesonderten Kommunikationskanal kommunizieren und zu einer Übereinkunft kommen. Dann muss der Verwalter jedes Serverknotens des Blockchain-Netzwerks manuell die Positivliste aktualisieren. Fehlerhafte Einträge in die Positivliste oder versäumte Aktualisierungen der Positivliste stellen ein Sicherheitsrisiko und ein funktionales Risiko für das Blockchain-Netzwerk dar. Zudem steht die Kommunikation zwischen allen Teilnehmern des Netzwerks stets in der Gefahr eines Man-in-the-middle-Angriffs. Darüber hinaus gibt es keinen Weg zu prüfen, ob alle Teilnehmer des Systems dieselbe Positivliste haben. Ein vertrauensunwürdiger Teilnehmer kann grundsätzlich weitere vertrauensunwürdige Teilnehmer in das Blockchain-Netzwerk einschleusen, sodass eine Vertraulichkeit der im Blockchain-Netzwerk gespeicherten Daten nicht gewährleistet ist.

Ein alternativer Ansatz zieht eine frei zugängliche Blockchain heran, wobei die im Blockchain-Netzwerk gespeicherten Daten verschleiert werden: Dazu wird eine private Instanz der frei zugänglichen Blockchain genutzt und die Regeln für die Zusammenarbeit bleiben identisch. Eine Vertraulichkeit der Daten wird durch Architekturentscheidungen zwar erreicht. Allerdings wird die Komplexität in diesem Ansatz deutlich erhöht, sodass dieser Ansatz rasch an praktische Grenzen stößt.

Es ist daher Aufgabe der Erfindung, ein verbessertes Verfahren zur Zulassung zu einem mit Knoten gebildeten Blockchain-Netzwerk zu schaffen. Insbesondere soll eine Zulassung von Knoten zum Blockchain-Netzwerk dezentral und zugleich zuverlässig und sicher erfolgen können. Zudem ist es Aufgabe der Erfindung, ein verbessertes Blockchain-Netzwerk zu schaffen, bei welchem vorzugsweise die Zulassung von Knoten dezentral und zugleich sicher erfolgen kann. Zudem ist es Aufgabe der Erfindung, ein Computerprogrammprodukt sowie einen computerlesbaren Datenträger zu schaffen, mit welchen das Verfahren zur Zulassung ausführbar ist.

Die Aufgabe der Erfindung wird mit einem Verfahren zur Zulassung zu einem mit Knoten gebildeten Blockchain-Netzwerk mit den in Anspruch 1 angegebenen Merkmalen sowie mit einem Blockchain-Netzwerk mit den in Anspruch 12 angegebenen Merkmalen und mit einem Computerprogrammprodukt mit den in Anspruch 13 angegebenen Merkmalen sowie mit einem computerlesbaren Datenträger mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Zulassung zu einem mit Knoten gebildeten Blockchain-Netzwerks BCN durch einen Knoten SBN des Blockchain-Netzwerks BCN wird mindestens eine mit allen übrigen Knoten des Blockchain-Netzwerks abgestimmte Teilnahmeregel vorgehalten und es bei wird eine Zulassungskontrolle durchgeführt, mittels welcher anhand der mindestens einen Teilnahmeregel eine Zulassungsentscheidung zur Zulassung zum Blockchain-Netzwerk getroffen wird, wenn ein bislang nicht am Blockchain-Netzwerk teilnehmender Knoten die mindestens eine Teilnahmeregel erfüllt, und bei welchem diese Zulassungsentscheidung mit Zulassungsentscheidungen übriger Knoten des Blockchain-Netzwerks abgeglichen wird.

Die Erfindung schlägt somit gegenüber dem Stand der Technik vorteilhaft ein dezentrales Vorhalten der mindestens einen Teilnahmeregel sowie dezentrale Zulassungsentscheidung zum Blockchain-Netzwerk vor. Eine übereinstimmende Zulassung eines nicht am Blockchain-Netzwerk teilnehmenden Knotens wird erreicht, indem jeder Knoten selbstständig aufgrund der bei ihm vorgehaltenen Teilnahmeregeln eine Zulassungsentscheidung trifft. Diese Zulassungsentscheidung wird mit Zulassungsentscheidungen übriger Knoten des Blockchain-Netzwerks abgeglichen. Infolge des Abgleichens der Zulassungsentscheidung mit Zulassungsentscheidungen übriger Knoten kann eine Manipulation des Blockchain-Netzwerks durch einen vertrauensunwürdigen Knoten wirksam verhindert werden.

Vorzugsweise ist bei dem erfindungsgemäßen Verfahren die Teilnahmeregel vordefiniert und lediglich durch eine Übereinkunft aller am Blockchain-Netzwerk teilnehmenden Knoten geändert, insbesondere aktualisiert, werden. Auf diese Weise ist das Risiko einer Manipulation durch nicht vertrauenswürdige Knoten des Blockchain-Netzwerks reduziert.

Vorteilhaft lässt sich das erfindungsgemäße Verfahren automatisiert ausführen, sodass das Aushandeln der Teilnahme an dem Blockchain-Netzwerk ohne manuelles Zutun von natürlichen Personen und folglich besonders kostengünstig und wenig fehleranfällig ausführbar ist. Zweckmäßig ist das erfindungsgemäße Verfahren ein computer-implementiertes Verfahren.

Unter einem Knoten im Sinne dieser Erfindung ist ein Rechner oder ein Server oder ein mobiles Endgerät mit Rechenressourcen zu verstehen, welcher als Hardware zur Begründung eines Blockchain-Netzwerks in dieses integriert ist. Ein Knoten bildet also die Hardware eines Nutzers des Blockchain-Netzwerks aus, welcher an dem Blockchain-Netzwerk teilnimmt. Infolgedessen wird im Rahmen dieser Erfindung von einem an dem Blockchain-Netzwerk teilnehmenden Knoten dann gesprochen, wenn ein Nutzer des Knotens mittels dieses Knotens an dem Blockchain-Netzwerk teilnimmt. Ein an dem Blockchain-Netzwerk nicht teilnehmender Knoten ist ein Knoten, dessen Nutzer an dem Blockchain-Netzwerk nicht teilnimmt.

Bei dem erfindungsgemäßen Verfahren wird die Zulassungsentscheidung vorzugsweise mit den Zulassungsentscheidungen sämtlicher übrigen Knoten des Blockchain-Netzwerks abgeglichen. Auf diese Weise werden Zulassungsentscheidungen sämtlicher übriger Knoten des Blockchain-Netzwerks berücksichtigt. Vorzugsweise werden die Zulassungsentscheidungen abgeglichen und der nicht am Blockchain-Netzwerk teilnehmende Knoten wird zur Teilnahme an dem Blockchain-Netzwerk zugelassen, wenn die Zulassungsentscheidungen übriger Knoten des Blockchain-Netzwerks mit dieser Zulassungsentscheidung übereinstimmen. Bevorzugt wird bei dem erfindungsgemäßen Verfahren dann, wenn die Zulassungsentscheidung mit Zulassungsentscheidungen aller übrigen Knoten des Blockchain-Netzwerks übereinstimmt, abhängig von dieser übereinstimmenden Zulassungsentscheidung der nicht am Blockchain-Netzwerk teilnehmende Knoten zur Teilnahme an dem Blockchain-Netzwerk zugelassen. Aufgrund des in dieser Weiterbildung der Erfindung erforderlichen Einvernehmens sämtlicher Knoten des Blockchain-Netzwerks kann zuverlässig verhindert werden, dass weitere, nachfolgend zugelassene Knoten derart eine Mehrheit im Blockchain-Netzwerk erlangen und das Blockchain-Netzwerk derart übernehmen, dass die Zulassung dieser Mehrheit genügt, um künftige Zulassungsentscheidungen allein durch diese Mehrheit zu treffen. Denn in dieser Weiterbildung der Erfindung genügt keine Mehrheit der am Blockchain-Netzwerk teilnehmenden Knoten, sondern es bedarf einer einhelligen Zulassungsentscheidung sämtlicher Knoten des Blockchain-Netzwerks.

Bei dem erfindungsgemäßen Verfahren weist die mindestens eine Teilnahmeregel zweckmäßig eine Menge von Knotenkennungen der zur Teilnahme am Blockchain-Netzwerk zugelassenen Knoten auf. Unter Knotenkennungen im Sinne dieser Erfindung sind Kennzeichen zu verstehen, welche die Knoten, vorzugsweise eindeutig, kennzeichnen. Knotenkennungen können vorteilhaft mit zumindest einem Teil einer IP-Adresse und/oder einer MAC-Adresse und/oder einer Netzwerkadresse und/oder eines Inventarkennzeichens wie einer Inventarnummer und/oder eines Personenkennzeichens wie einer Personenkennziffer eines den Knoten nutzenden Nutzers und/oder einem sonstigen Identifikationskennzeichens, welches den Knoten selbst und/oder eine Gruppenzugehörigkeit und/oder eine Berechtigung des Knotens kennzeichnet, gebildet sein. Alternativ oder zusätzlich und ebenfalls bevorzugt können Knotenkennungen zumindest eine kryptographische Signatur und/oder einen kryptographischen Schlüssel und/oder einen Zero-Knowledge-Beweis aufweisen.

In einer bevorzugten Weiterbildung des erfindungsgemäßen Verfahrens enthält die mindestens eine Teilnahmeregel Voraussetzungen zur Zulassung zum Blockchain-Netzwerk. Unter Voraussetzungen sind dabei insbesondere eine oder mehrere Eigenschaften des Knotens zu verstehen, welcher die Zulassung zur Teilnahme an dem Blockchain-Netzwerk begehrt. Alternativ oder zusätzlich und ebenfalls bevorzugt können die Voraussetzungen auch eine Handlung, insbesondere einen Proofof-Work, und/oder eine Zertifizierung und/oder ein sonstiges Attribut umfassen oder darstellen.

In einer bevorzugten Weiterbildung des erfindungsgemäßen Verfahrens legt die mindestens eine Teilnahmeregel fest, welche Rechte ein zum Blockchain-Netzwerk zugelassener Knoten innehat. Solche Reche können insbesondere Leserechte und/oder Schreibrechte im Blockchain-Netzwerk und/oder ein Recht, eine Zulassungsentscheidung zur Zulassung von nicht am Blockchain-Netzwerk teilnehmenden Knoten zu treffen, umfassen.

Bevorzugt regelt bei dem Verfahren gemäß der Erfindung die mindestens eine Teilnahmeregel, wie viele oder welcher Anteil an Knoten des Blockchain-Netzwerks einer auf eine Zulassung eines nicht am Blockchain-Netzwerk teilnehmenden Knotens gerichteten Zulassungsentscheidung, also einer Entscheidung, die Zulassung zu gewähren, zustimmen müssen. Auf diese Weise kann insbesondere ein Quorum und/oder eine Quote und/oder eine Mindestanzahl von Knoten des Blockchain-Netzwerks festgelegt werden, deren Zulassungsentscheidung zu einer Zulassung eines nicht am Blockchain-Netzwerk teilnehmenden Knotens in der Zulassungsentscheidung übereinstimmen muss. Eine Einnahme einer entscheidungserheblichen Mehrheit für künftige Zulassungsentscheidungen ist in dieser Weiterbildung der Erfindung für nicht vertrauenswürdige Knoten wirksam erschwert.

Bei einer vorteilhaften Weiterbildung des erfindungsgemäßen Verfahrens wird die Zulassungsentscheidung mittels mindestens eines Smart Contracts getroffen. Auf diese Weise können die Zulassungsentscheidungen automatisiert und zuverlässig und manipulationssicher getroffen werden. Eine aufwendige manuelle Administration des Blockchain-Netzwerks ist in dieser Weiterbildung weiter reduziert.

Bei dem erfindungsgemäßen Verfahren ist der mindestens eine Smart Contract an mehreren, vorzugsweise sämtlichen, Knoten des Blockchain-Netzwerks vorgesehen und die Zulassungsentscheidung wird mit Zulassungsentscheidungen, welche mit diesen Smart Contracts getroffen werden, abgeglichen. Auf diese Weise kann das erfindungsgemäße Verfahren vorteilhaft durch jeden Knoten des erfindungsgemäßen Verfahrens ausgeführt werden. Die Transparenz der Zulassungsentscheidungen und somit die Vertrauenswürdigkeit des erfindungsgemäßen Verfahrens ist in dieser Weiterbildung der Erfindung deutlich erhöht.

In einer vorteilhaften Weiterbildung des erfindungsgemäßen Verfahrens wird nach Zulassung zum Blockchain-Netzwerk durch den Knoten eine Zulassungsentscheidung über diesen Knoten abhängig von einem Verhalten der durch diesen Knoten zugelassenen Knotens im Blockchain-Netzwerk geändert. Insbesondere wird die Zulassungsentscheidung widerrufen oder aufrechterhalten oder hinsichtlich einer Gewährung von Rechten, etwa Leserechten und/oder Schreibrechten und/oder eines Rechts, Zulassungsentscheidungen zu treffen, geändert, d.h. angepasst.

Das erfindungsgemäße Computerprogrammprodukt ist zur Ausführung eines erfindungsgemäßen Verfahrens wie oben beschrieben ausgebildet. Der computerlesbare Datenträger weist ein erfindungsgemäßes Computerprogrammprodukt wie oben beschrieben auf.

Das erfindungsgemäße Blockchain-Netzwerk ist mit Knoten gebildet, wobei einer, mehrere oder sämtliche der Knoten zur Ausführung eines erfindungsgemäßen Verfahrens wie oben beschrieben ausgebildet ist oder sind.

Nachfolgend wird die Erfindung anhand eines in der Zeichnung dargestellten Ausführungsbeispiels näher erläutert. Es zeigen:
- Fig. 1: ein erfindungsgemäßes Verfahren zur Zulassung zu einem mit Knoten gebildeten Blockchain-Netzwerks durch einen Knoten des Blockchain-Netzwerks schematisch in einem Ablaufdiagramm sowie
- Fig. 2: das mittels des erfindungsgemäßen Verfahrens gem. Fig. 1 abgesicherte Blockchain-Netzwerk schematisch in einer Prinzipskizze.

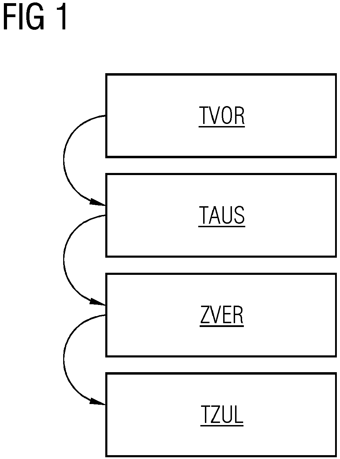

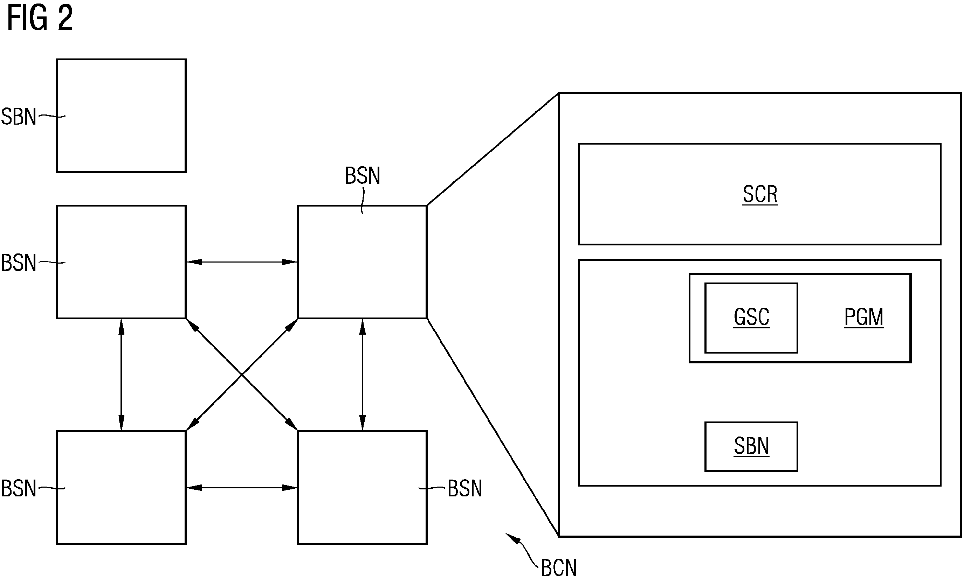

Bei dem erfindungsgemäßen Blockchain-Netzwerk wird mittels des in Fig. 1 dargestellten erfindungsgemäßen Verfahrens ein nicht am Blockchain-Netzwerk teilnehmender Knoten zur Teilnahme an dem in Fig. 2 dargestellten Blockchain-Netzwerk BCN zugelassen. Dabei führt jeder der in Fig. 2 dargestellten Blockchain-Serverknoten BSN des Blockchain-Netzwerks BCN das erfindungsgemäße Verfahren gem. Fig. 1 zur Zulassung zu einem mit Knoten gebildeten Blockchain-Netzwerks BCN durch einen Blockchain-Serverknoten BSN des Blockchain-Netzwerks BCN aus. Das vorgeschlagene System weist die folgenden Komponenten auf:
- Blockchain-Knoten SBN: Blockchain-Knoten BSN bilden Knoten in Gestalt von Rechnern oder Servern oder mobilen Endgeräten, welche von Nutzern betrieben werden. Dabei können diese Blockchain-Knoten bereits an dem Blockchain-Netzwerks BCN teilnehmen. In diesem Falle werden die Blockchain-Knoten häufig auch als Blockchain-Serverknoten BSN bezeichnet. Eine detailliertere Beschreibung der Blockchain-Serverknoten BSN erfolgt in der weiteren Beschreibung. Zudem können im Rahmen der vorliegenden Beschreibung des Ausführungsbeispiels vereinzelt Blockchain-Knoten SBN vorliegen, welche noch nicht an dem Blockchain-Netzwerk teilnehmen, aber eine Teilnahme an dem Blockchain-Netzwerk BCN begehren.
- Server-Konfigurationsregeln SCR: Server-Konfigurationsregeln SCR werden an jedem Blockchain-Knoten BCN vorgehalten. Die Server-Konfigurationsregeln beinhalten eine Liste von Verweisen zu anderen Knoten, beispielsweise in Form von IP-Adressen oder Signaturen, welchen die Teilnahme an Netzwerk erlaubt ist, sodass lediglich von den Blockchain-Knoten SBN verabredete Knoten an dem Blockchain-Netzwerk BCN teilnehmen können.
- Blockchain-Serverknoten BSN: Blockchain-Knoten SBN bilden dann, wenn diese an dem Blockchain-Netzwerk BCN teilnehmen und wenn sie Server-Konfigurationsregeln SCR vorhalten, Blockchain-Serverknoten BSN aus.
- Blockchain-Netzwerk BCN: Das Blockchain-Netzwerk BCN weist eine Mehrzahl von Blockchain-Serverknoten BSN auf, welche in der Art eines Peer-to-Peer-Netzwerks miteinander verbunden sind. Das Blockchain-Netzwerk BCN hält computerimplementiert miteinander kryptographisch verknüpfte Blöcke vor, um Transaktionen manipulationssicher vorzuhalten und zu verwalten, im vorliegenden Fall Transkationen zwischen Logistikanbietern und Logistiknutzern innerhalb einer Lieferkette.
- Teilnahmeregeln PGM: Teilnahmeregeln PGM bilden einen Satz vordefinierter Regeln, welche dezentral von sämtlichen Blockchain-Serverknoten BSN des Blockchain-Netzwerks BCN verabredet sind. Die Teilnahmeregeln PGM werden beispielsweise als nicht-manipulierbare Smart Contracts formuliert und umgesetzt und an allen Blockchain-Server-kno-ten BSN ausgeführt. Die Teilnahmeregeln PGM formulieren die Voraussetzungen für eine Teilnahme von Blockchain-Knoten SBN an dem Blockchain-Netzwerk in einer dezentralen Art und Weise.
- Smarte Teilnahmeverträge GSC: Smarte Teilnahmeverträge GSC sind ein Satz von Smart Contracts, welche die Teilnahmeregeln PGM enthalten. Die smarten Teilnahmeverträge GSCs werden über sämtliche teilnehmenden Blockchain-Serverknoten BSN verteilt und werden von allen Blockchain-Serverknoten SBN ausgeführt.

Das erfindungsgemäße Verfahren wird mit den nachfolgend angegebenen Schritten ausgeführt:
Bei dem Blockchain-Netzwerk BCN halten sämtliche Blockchain-Serverknoten BSN eine Liste von IP-Adressen sämtlicher Blockchain-Serverknoten BSN des Blockchain-Netzwerks BCN vor. Diese Liste wurde von den Blockchain-Serverknoten BSN bereits während der Errichtung des Blockchain-Netzwerks BCN vereinbart.

Bei dem erfindungsgemäßen Verfahren wird ein Satz von Teilnahmeregeln PGM zwischen den Blockchain-Serverknoten BSN vereinbart und an jedem Blockchain-Serverknoten BSN vorgehalten TVOR. Die Teilnahmeregeln PGM enthalten Vorgaben, welche Bedingungen künftig an dem Blockchain-Netzwerk BCN teilnehmenden Blockchain-Knoten SBN erfüllen müssen, damit sie an dem Blockchain-Netzwerk BCN teilnehmen können. Zudem enthalten die Teilnahmeregeln Vorgaben über die Rechte von am Blockchain-Netzwerk BCN teilnehmenden Blockchain-Serverknoten BSN. Solche Rechte können beispielsweise Leserechte näher spezifizieren oder auch die Rechte, Zulassungsentscheidungen zur Zulassung von Blockchain-Knoten BCN zum Blockchain-Netzwerk BCN zu treffen, umfassen. Zudem umfassen die Teilnahmeregeln PGM Vorgaben, wie neu zugelassene Blockchain-Knoten SBN den übrigen Blockchain-Serverknoten BSN bekannt gemacht werden. Ferner umfassen die Teilnahmeregeln PGM eine Mindestanzahl oder eine Mindestquote von Blockchain-Serverknoten BSN des Blockchain-Netzwerks BCN, deren auf eine Zulassung des nicht am Blockchain-Netzwerk BCN teilnehmenden Blockchain-Knoten SBN gerichtete Zulassungsentscheidung übereinstimmen müssen. Die Teilnahmeregeln PGM sind in Form von smarten Teilnahmeverträgen GSC beispielsweise in Form von Smart Contracts realisiert.

Die verabredete Liste von Blockchain-Knoten BCN, welche zur Teilnahme am Blockchain-Netzwerk BCN zugelassen sind, umfasst wie oben erläutert Knotenkennungen beispielsweise in Form von IP-Adressen.

In weiteren, nicht eigens dargestellten Ausführungsbeispielen kann die Liste anstelle von oder zusätzlich zu IP-Adressen auch sonstige Knotenkennungen enthalten, beispielsweise MAC-Adressen der die Blockchain-Serverknoten bildenden Hardware und/oder Knotensignaturen der Blockchain-Knoten BCN und/oder einen kryptographischen Schlüssel und/oder einen Zero-Knowledge-Beweis enthalten. Diese Knotenkennungen sind als Parameter in den smarten Teilnahmeverträgen GSC enthalten.

Die Blockchain-Serverknoten BSN weisen ein Skript auf, welches eingerichtet ist, Nachrichten der smarten Teilnahmeverträge GSC entgegenzunehmen.

Sobald Blockchain-Knoten SBN als Blockchain-Serverknoten BSN integriert sind, werden die smarten Teilnahmeverträge GSC auf ihnen ausgeführt. Das Skript nimmt Nachrichten der smarten Teilnahmeverträge GCS entgegen, aktualisiert die Liste der Knotenkennungen von teilnehmenden Blockchain-Serverknoten BSN und aktualisiert die Server-Konfigurationsregeln SCR.

Wenn die Teilnehmer ihre Blockchain-Serverknoten BSN starten, sind diese noch nicht Teil des Blockchain-Netzwerks BCN. Wenn nun ein weiterer, nicht am Blockchain-Netzwerk BCN teilnehmender, Blockchain-Knoten SBN in das Blockchain-Netzwerk BCN integriert werden soll, weil dieser seine Zulassung zum Blockchain-Netzwerk BCN beantragt, so werden zusätzlich die nachfolgend genannten Schritte durchgeführt:
Der weitere Blockchain-Knoten SBN beantragt bei einem oder mehreren Blockchain-Serverknoten BSN den Einbezug in das Blockchain-Netzwerk BCN. Einer der Blockchain-Serverknoten BSN schlägt daraufhin den Einbezug dieses weiteren Blockchain-Knotens SBN in das Blockchain-Netzwerk BCN vor.

Die Teilnahmeregeln PGM werden an allen Blockchain-Knoten SBN in einem Schritt TAUS ausgeführt, um zu prüfen, ob der weitere Blockchain-Knoten SBN zum Blockchain-Netzwerk BCN hinzugefügt werden kann. Wenn der weitere Blockchain-Knoten SBN eine der erforderlichen Voraussetzungen zur Zulassung zum Blockchain-Netzwerk BCN nicht erfüllt, so wird die Zulassung dieses weiteren Blockchain-Knotens SBN abgelehnt. Erfüllt der weitere Blockchain-Knoten SBN hingegen alle Voraussetzungen, so wird an jeden Blockchain-Knoten SBN der weiteren Blockchain-Knoten SBN eine positive Zulassungsentscheidung zur Zulassung zum Blockchain-Netzwerk BCN getroffen. Wenn sämtliche Blockchain-Serverknoten BSN eine positive Zulassungsentscheidung treffen, sowie wird dies in einem Vergleichsschritt ZVER festgestellt. In diesem Falle wird der nicht am Blockchain-Netzwerk BCN teilnehmende weitere Blockchain-Knoten SBN tatsächlich zur Teilnahme an dem Blockchain-Netzwerk BCN zugelassen TZUL und die Knotenkennung dieses weiteren Blockchain-Knotens SBN zur Positivliste hinzugefügt. Die Positivliste mit der Knotenkennung dieses weiteren Blockchain-Knotens SBN wird in den Server-Konfigurationsregeln SCR aktualisiert.

Das Skript an jedem Blockchain-Serverknoten BSN fragt regelmäßig die Server-Konfigurationsregeln SCR ab, um die aktuelle Positivliste in den smarten Teilnahmeverträgen GSC abzubilden. Der zusätzliche Blockchain-Knoten SBN kann nun durch die Blockchain-Serverknoten BSN als teilnahmeberechtigt erkannt werden und er wird zur Teilnahme an dem Blockchain-Netzwerk BCN zugelassen.

## Patentansprüche

1. Computerimplementiertes Verfahren zur Zulassung zu einem mit Knoten (BSN) gebildeten Blockchain-Netzwerks (BCN) durch einen Knoten (BSN) des Blockchain-Netzwerks (BCN), bei welchem mindestens eine mit allen übrigen Knoten (BSN) des Blockchain-Netzwerks (BCN) abgestimmte Teilnahmeregeln vorgehalten (TVOR) wird und bei welchem eine Zulassungskontrolle durchgeführt wird, mittels welcher anhand der mindestens einen Teilnahmeregel eine Zulassungsentscheidung zur Zulassung zum Blockchain-Netzwerk (BCN) getroffen (TAUS) wird, wenn ein bislang nicht am Blockchain-Netzwerk (BCN) teilnehmender Knoten die mindestens eine Teilnahmeregel erfüllt und bei welchem diese Zulassungsentscheidung mit Zulassungsentscheidungen übriger Knoten (BSN) des Blockchain-Netzwerks (BCN) verglichen (TVER) wird.

2. Verfahren nach Anspruch 1, bei welchem die Zulassungsentscheidung mit den Zulassungsentscheidungen der übrigen Knoten (BSN) des Blockchain-Netzwerks (BCN) verglichen wird.

3. Verfahren nach einem der vorhergehenden Ansprüche, bei welchem dann, wenn die Zulassungsentscheidung mit allen übrigen Knoten (BSN) des Blockchain-Netzwerks (BCN) übereinstimmt, abhängig von dieser übereinstimmenden Zulassungsentscheidung der nicht zum Blockchain-Netzwerk (BCN) gehörige Knoten (BSN) zur Teilnahme an dem Blockchain-Netzwerk (BCN) zugelassen (TZUL) wird.

4. Verfahren nach einem der vorhergehenden Ansprüche, bei welchem die mindestens eine Teilnahmeregel eine Menge von Knotenkennungen der zur Teilnahme am Blockchain-Netzwerk (BCN) zugelassenen Knoten (BSN) aufweist.

5. Verfahren nach dem vorhergehenden Anspruch, bei welchem Knotenkennungen jeweils zumindest eine IP-Adresse und/oder eine MAC-Adresse und/oder eine kryptographische Signatur und/oder einen kryptographischen Schlüssel und/oder einen Zero-Knowledge-Beweis aufweisen.

6. Verfahren nach einem der vorhergehenden Ansprüche, bei welchem die mindestens eine Teilnahmeregel Voraussetzungen zur Zulassung zum Blockchain-Netzwerk (BCN) enthält.

7. Verfahren nach einem der vorhergehenden Ansprüche, bei welchem die mindestens eine Teilnahmeregel festlegt, welche Rechte ein zum Blockchain-Netzwerk (BCN) zugelassener Knoten (BSN) innehat.

8. Verfahren nach einem der vorhergehenden Ansprüche, bei welchem die mindestens eine Teilnahmeregel regelt, wie viele oder welcher Anteil an Knoten des Blockchain-Netzwerks (BCN) einer Zulassung eines nicht am Blockchain-Netzwerk (BCN) teilnehmenden Knotens (BSN) zustimmen müssen.

9. Verfahren nach einem der vorhergehenden Ansprüche, bei welchem die Zulassungsentscheidung mittels mindestens eines Smart Contracts getroffen wird.

10. Verfahren nach einem der vorhergehenden Ansprüche, bei welchem der mindestens eine Smart Contract an mehreren, vorzugsweise sämtlichen, Knoten (BSN) des Blockchain-Netzwerks (BCN) vorgesehen ist und die Zulassungsentscheidung mit Zulassungsentscheidungen, welche mit diesen Smart Contracts getroffen werden, verglichen wird.

11. Verfahren nach einem der vorhergehenden Ansprüche, bei welchem nach Zulassung zum Blockchain-Netzwerks (BCN) durch den Knoten (BSN) eine Zulassungsentscheidung über diesen Knoten (BSN) und/oder ein Recht dieses Knotens und/oder ein Verhalten eines oder der durch diesen Knoten (BSN)zugelassenen Knoten (BSN) im Blockchain-Netzwerk (BCN) abhängig von einem Verhalten eines oder der durch diesen Knoten (BSN)zugelassenen Knoten (BSN) im Blockchain-Netzwerk (BCN) veröffentlicht und/oder geändert und/oder sanktioniert und/oder protokolliert wird.

12. Computerprogrammprodukt, ausgebildet zur Ausführung eines Verfahrens nach einem der vorhergehenden Ansprüche.

13. Computerlesbarer Datenträger mit einem Computerprogrammprodukt nach dem vorhergehenden Anspruch.

14. Blockchain-Netzwerk, welches mit Knoten (BSN) gebildet ist, wobei einer, mehrere oder sämtliche der Knoten (BSN) zur Ausführung eines Verfahrens nach einem der Ansprüche 1 bis 9 ausgebildet ist oder sind.
